# EUROPEAN PATENT APPLICATION

(11) **EP 4 607 653 A1**
(43) Date of publication of application: **27.08.2025**
(21) Application number: 23918108.4
(22) Date of filing: 28.01.2023
(51) Int. Cl.: H01M 10/6557, H01M 50/242

(54) **BATTERY AND ELECTRIC DEVICE**

(71) Applicant: Contemporary Amperex Technology (Hong Kong) Limited, Hong Kong (HK)
(72) Inventor: HUANG, Xiaoteng, Ningde, Fujian 352100 (CN); HOU, Yuepan, Ningde, Fujian 352100 (CN); SONG, Binjie, Ningde, Fujian 352100 (CN)
(74) Representative: Behr, Wolfgang
(86) International application number: PCT/CN2023/073606
(87) International publication number: WO 2024/156101

(57) **Abstract**

The present application provides a battery and an electric device, relating to the technical field of batteries. The battery includes a plurality of battery cells, wherein the plurality of battery cells are stacked in a first direction, the plurality of battery cells include two first battery cells located at two ends in the first direction, two adjacent battery cells are provided therebetween with at least one first thermal management component, and one side of at least one of the first battery cells away from the first thermal management component in the first direction is provided with at least one second thermal management component, where in the first direction, the thickness of the at least one second thermal management component is less than the that of the at least one first thermal management component, so that the amount by which the at least one second thermal management component may be compressed in the first direction matches the amount of expansion of the first battery cell in the direction away from the first thermal management component, thereby meeting the expansion requirement of the first battery cell in the direction away from the first thermal management component, and reducing the space occupied by the second thermal management component in the first direction, which is beneficial to improve the energy density of the battery.

## Description

### Technical Field

The present application relates to the field of battery technology, and specifically, to a battery and an electric device.

### Background Art

At present, secondary batteries, such as lithium-ion batteries, sodium-ion batteries, solid-state batteries, etc., have outstanding advantages such as high energy density and good cycle performance, and are widely used in the fields of portable electronic devices, electric vehicles, electric tools, unmanned aerial vehicles, energy storage equipment, etc. With the widespread use of batteries, the performance requirements for batteries are also increasing, especially the energy density of batteries. Hence, how to increase the energy density of batteries become the problem urgent to be solved in the technical field of batteries.

### Summary

Embodiments of the present application provide a battery and an electric device, to increase the energy density of the battery.

In a first aspect, embodiments of the present application provide a battery, including a plurality of battery cells, wherein the plurality of battery cells are stacked in a first direction, the plurality of battery cells include two first battery cells located at two ends in the first direction, two adjacent battery cells are provided therebetween with at least one first thermal management component, and one side of at least one of the first battery cells away from the at least one first thermal management component in the first direction is provided with at least one second thermal management component, where in the first direction, the thickness of the at least one second thermal management component is less than the thickness of the at least one first thermal management component.

In the above technical solution, when the first battery cell expands in a direction away from the first thermal management component, the at least one second thermal management component provided on the side of the first battery cell away from the first thermal management component may be compressed in the first direction to absorb the expansion of the first battery cell in the direction away from the first thermal management component. The thickness of the at least one second thermal management component as a whole provided on the side of the first battery cell away from the first thermal management component is less than the thickness of the at least one first thermal management component as a whole provided between two adjacent battery cells, so that the amount by which the at least one second thermal management component provided on the side of the first battery cell away from the first thermal management component may be compressed in the first direction matches the amount of expansion of the first battery cell in the direction away from the first thermal management component, thereby meeting the expansion requirement of the first battery cell in the direction away from the first thermal management component, and reducing the space occupied by the second thermal management component in the first direction, which is beneficial to improve the energy density of the battery. In addition, since the first thermal management component needs to absorb the expansion of the battery cells on two sides thereof in the first direction, the second thermal management component is only provided to absorb the expansion of the first battery cell on one side thereof in the first direction. The thickness of the at least one second thermal management component as a whole provided on the side of the first battery cell away from the first thermal management component is less than the thickness of the at least one first thermal management component as a whole provided between two adjacent battery cells. When the first thermal management component is compressed to the limit in the first direction, the second thermal management component is also compressed to the limit in the first direction or the space where the second thermal management component can be further compressed in the first direction is very small. In this way, after the first thermal management component is compressed to the limit in the first direction, the first battery cell cannot continue to expand in the direction away from the first thermal management component or the expansion amount of the first battery cell in the direction away from the first thermal management component is very small, which is conducive to making the first battery cell and the battery cell(s) located between the two first battery cells tend to have consistent expansion amount in the first direction, thereby reducing the risk of the first battery cell that the first battery cell has larger expansion amount in the first direction due to the larger amount by which the second thermal management component may be compressed in the first direction, to thereby result in that the shell of the first battery cell is damaged due to expansion.

In some embodiments of the first aspect of the present application, the battery further includes two fixing parts, where in the first direction, the two fixing parts are located on two sides of the plurality of battery cells, the at least one first thermal management component abuts between two adjacent battery cells, and the at least one second thermal management component abuts between the fixing part and the first battery cell.

In the above technical solution, the battery further includes two fixing parts, the two fixing parts are located on two sides of the plurality of battery cells in the first direction, the at least one first thermal management component abuts between two adjacent battery cells, and the at least one second thermal management component abuts between the fixing part and the first battery cell. The arrangement of the fixing parts may limit the whole structure formed by all battery cells, first thermal management component and second thermal management component, facilitating the stable installation of the battery cells, first thermal management component and second thermal management component, so as to keep stable relative position relationship between the battery cells, first thermal management component and second thermal management component.

In some embodiments of the first aspect of the present application, the battery further includes a box, and the plurality of battery cells, the at least one first thermal management component and the at least one second thermal management component are accommodated in the box; and the box includes two first side walls arranged opposite to each other in the first direction, and the first side walls form the fixing parts.

In the above technical solution, the first side walls of the box form the fixing parts, so there is no need to separately provide a structure to form the fixing part, which is beneficial to simplify the structure of the battery and reduce the weight of the battery.

In some embodiments of the first aspect of the present application, the battery further includes a box, and the plurality of battery cells, the at least one first thermal management component and the at least one second thermal management component are accommodated in the box; and the battery further includes separation beams, the separation beams are installed inside the box, and the separation beams form the fixing parts.

In the above technical solution, the separation beams are installed inside the box, and the separation beams form the fixing parts. Then, the expansion force of each battery cell during expanding indirectly acts on the separation beam, reducing the damage of the expansion force of the battery cell to the box.

In some embodiments of the first aspect of the present application, the battery further includes barrier members, where in the first direction, the barrier member abuts between the at least one second thermal management component and the fixing part, and the thermal resistance of the barrier member is greater than the thermal resistance of the second thermal management component.

In the above technical solution, the barrier member abuts between the at least one second thermal management component and the fixing part, and the thermal resistance of the barrier member is greater than the thermal resistance of the second thermal management component. The barrier member can effectively hinder heat transfer between the second thermal management component and the blocking part, so that the second thermal management component is difficult to exchange heat with the fixing part, thereby enabling the second thermal management component to efficiently exchange heat with the first battery cell, thereby adjusting the temperature of the first battery cell.

In some embodiments of the first aspect of the present application, one first thermal management component is provided between two adjacent battery cells; and/or one second thermal management component is provided on a side of the first battery cell away from the first thermal management component in the first direction.

In the above technical solution, if two adjacent battery cells are provided therebetween with one first thermal management component, the temperature of the battery cells can be adjusted with a minimum number of first thermal management components, which is beneficial to simplify the battery structure, reduce the volume of the battery and save the cost of the battery. It can also reduce the space occupied by all first thermal management components, which is beneficial to improve the energy density of the battery. If one side of the first battery cell away from the first thermal management component in the first direction is provided with one second thermal management component, the temperature of the battery cells can be adjusted with a minimum number of second thermal management components, which is beneficial to simplify the battery structure, reduce the volume of the battery and save the cost of the battery. It can also reduce the space occupied by all second thermal management components, which is beneficial to improve the energy density of the battery.

In some embodiments of the first aspect of the present application, in the first direction, the thickness of the second thermal management component is less than the thickness of the first thermal management component.

In the above technical solution, the thickness of the second thermal management component in the first direction is less than the thickness of the first thermal management component in the first direction, which can reduce the space occupied by the second thermal management component in the first direction and is beneficial to improve the energy density of the battery.

In some embodiments of the first aspect of the present application, a first flow channel for accommodating a heat exchange medium is formed inside the first thermal management component.

In the above technical solution, a first flow channel for accommodating a heat exchange medium is formed inside the first thermal management component, and the heat exchange medium is accommodated in the first flow channel, so that the first thermal management component can realize the temperature regulation function of the battery cell. The configuration of the first flow channel also provides a space for the first thermal management component to be compressed in the first direction, so that the first thermal management component can absorb the expansion of the battery cell by being compressed, thereby meeting the expansion requirements of the battery cell.

In some embodiments of the first aspect of the present application, a plurality of first flow channels are formed inside the first thermal management component, where the plurality of first flow channels are arranged side by side in a second direction, and the second direction is perpendicular to the first direction.

In the above technical solution, the plurality of first flow channels arranged side by side in the second direction are formed inside the first thermal management component, which facilitates controlling the flow velocity and flow rate of the heat exchange medium in the first thermal management component.

In some embodiments of the first aspect of the present application, the first thermal management component includes a first tube body and at least one first division member disposed inside the first tube body, and the at least one first division member divides the internal space of the first tube body into the plurality of first flow channels.

In the above technical solution, the at least one first division member is provided in the internal space of the first tube body, to divide the internal space of the first tube body into the plurality of first flow channels for accommodating the heat exchange medium, so as to facilitate controlling the flow velocity and flow rate of the heat exchange medium in the first thermal management component.

In some embodiments of the first aspect of the present application, in the first direction, the first tube body includes a first tube wall and a second tube wall provided opposite to each other, and the first division member is obliquely provided between the first tube wall and the second tube wall and connected to the first tube wall and the second tube wall.

In the above technical solution, by making the first division member obliquely provided and connected between the first tube wall and the second tube wall, the first thermal management component can be compressed and deformed in the first direction to absorb the expansion of the battery cell, thereby reducing the difficulty of compressing the first thermal management component in the first direction.

In some embodiments of the first aspect of the present application, the first division member has a first surface and a second surface opposite to each other in the thickness direction thereof, where in the first direction, the first tube wall has a third surface facing the first flow channel, and the second tube wall has a fourth surface facing the first flow channel; the first surface is respectively arranged at an acute angle and an obtuse angle with the third surface and the fourth surface, and the second surface is respectively arranged at an obtuse angle and an acute angle with the third surface and the fourth surface, where the first surface is connected to the third surface through a first chamfered surface; and/or, the second surface is connected to the fourth surface through a second chamfered surface.

In the above technical solution, the first surface of the first division member and the third surface of the first tube wall are arranged at an acute angle and connected through a first chamfered surface, and/or the second surface of the first division member and the fourth surface of the second tube wall are arranged at an acute angle and connected through a second chamfered surface. This can increase the thicknesses of the portion of the first division member connected to the first tube wall and the portion of the first division member connected to the second tube wall in the second direction, thereby, on the one hand, improving the connection stability and reliability between the first division member and the tube wall, and on the other hand, alleviating the problem of cracks occurring between the first division member and the tube wall.

In some embodiments of the first aspect of the present application, the battery further includes a first confluence member and a second confluence member, a first confluence chamber is formed inside the first confluence member, and a second confluence chamber is formed inside the second confluence member, the first confluence member and the second confluence member are respectively connected to the two ends of the first thermal management component in the third direction, each of the first flow channels communicates with the first confluence chamber, each of the first flow channels communicates with the second confluence chamber, and any two of the third direction, the second direction and the first direction are perpendicular to each other; two first flow channels located at the ends in the second direction among the plurality of first flow channels are respectively a first end flow channel and a second end flow channel, and the cross-sectional area of at least one of the first end flow channel and the second end flow channel is smaller than the cross-sectional areas of other first flow channels.

In the above technical solution, the cross-sectional area of at least one of the two first flow channels (the first end flow channel and the second end flow channel) located at the ends in the second direction is smaller than the cross-sectional areas of other first flow channels, so that the flow resistance of at least one of the first flow channel located at the ends is larger, and the heat exchange medium flowing out of one of the first confluence member and the second confluence member can be distributed to the first flow channel(s) located between the first end flow channel and the second end flow channel, which is beneficial to distribute sufficient heat exchange medium to each first flow channel, thereby improving the uniformity of heat exchange.

In some embodiments of the first aspect of the present application, the cross-sectional area of at least one of the first end flow channel and the second end flow channel is the smallest among the plurality of first flow channels.

In the above technical solution, if the cross-sectional area of at least one of the first end flow channel and the second end flow channel is the smallest among the plurality of first flow channels, the one with the smallest cross-sectional area has the largest flow resistance, and the heat exchange medium is more likely to flow into the first flow channel located between the first end flow channel and the second end flow channel, which is beneficial to distribute sufficient heat exchange medium to each first flow channel, thereby improving the uniformity of heat exchange. The cross-sectional areas of the first end flow channel and the second end flow channel are the smallest among the plurality of first flow channels. When the battery cell expands, the amount by which the first thermal management component can be compressed in the corresponding regions of the first end flow channel and the second end flow channel in the first direction is smaller than those in the regions between the first end flow channel and the second end flow channel, so as to match the expansion amount of different regions of the battery cell in the second direction to meet the expansion amount requirements of different regions of the battery cell.

In some embodiments of the first aspect of the present application, a second flow channel for accommodating a heat exchange medium is formed inside the second thermal management component, and in the first direction, a size of the second flow channel is smaller than a size of the first flow channel.

In the above technical solution, a second flow channel for accommodating a heat exchange medium is formed inside the second thermal management component, and the heat exchange medium is accommodated in the second flow channel, so that the second thermal management component can realize the temperature regulation function of the battery cell. The configuration of the second flow channel also provides a space for the second thermal management component to be compressed in the first direction, so that the second thermal management component can absorb the expansion of the first battery cell in the direction away from the first thermal management component by being compressed, thereby meeting the expansion requirements of the first battery cell in the direction away from the first thermal management component. In the first direction, the size of the second flow channel is smaller than the size of the first flow channel, which facilitates reducing the thickness of the second thermal management component in the first direction, so as to reduce the space occupied by the second thermal management component in the first direction and is beneficial to improve the energy density of the battery.

In some embodiments of the first aspect of the present application, a second flow channel for accommodating a heat exchange medium is formed inside the second thermal management component.

In the above technical solution, a second flow channel for accommodating the heat exchange medium is formed inside the second thermal management component, and the heat exchange medium is accommodated in the second flow channel, so that the second thermal management component can realize the temperature regulation function of the first battery cell. The configuration of the second flow channel also provides a space for the second thermal management component to be compressed in the first direction, so that the second thermal management component can absorb the expansion of the first battery cell in the direction away from the first thermal management component by being compressed, thereby meeting the expansion requirements of the first battery cell in the direction away from the first thermal management component.

In some embodiments of the first aspect of the present application, the plurality of second flow channels are formed inside the second thermal management component, where the plurality of second flow channels are arranged side by side in the second direction, and the second direction is perpendicular to the first direction.

In the above technical solution, the plurality of second flow channels arranged side by side in the second direction are formed inside the second thermal management component, which facilitates controlling the flow velocity and flow rate of the heat exchange medium in the second thermal management component.

In some embodiments of the first aspect of the present application, the second thermal management component includes a second tube body and at least one second division member disposed inside the second tube body, and the at least one second division member divides the internal space of the second tube body into a plurality of second flow channels.

In the above technical solution, the at least one second division member is provided in the internal space of the second tube body, to divide the internal space of the second tube body into the plurality of second flow channels for accommodating the heat exchange medium, so as to facilitate controlling the flow velocity and flow rate of the heat exchange medium in the second thermal management component.

In some embodiments of the first aspect of the present application, in the first direction, the second tube body includes a third tube wall and a fourth tube wall provided opposite to each other, and the second division member is obliquely provided between the third tube wall and the fourth tube wall and connected to the third tube wall and the fourth tube wall.

In the above technical solution, by making the second division member obliquely provided and connected between the third tube wall and the fourth tube wall, the second thermal management component can be compressed and deformed in the first direction to absorb the expansion of the first battery cell, thereby reducing the difficulty of compressing the second thermal management component in the first direction.

In some embodiments of the first aspect of the present application, the second division member has a fifth surface and a sixth surface opposite to each other in the thickness direction thereof, where in the first direction, the third tube wall has a seventh surface facing the second flow channel, and the fourth tube wall has an eighth surface facing the second flow channel; the fifth surface is respectively arranged at an acute angle and an obtuse angle with the seventh surface and the eighth surface, and the sixth surface is respectively arranged at an obtuse angle and an acute angle with the seventh surface and the eighth surface; where the fifth surface is connected to the seventh surface through a third chamfered surface; and/or, the sixth surface is connected to the eighth surface through a fourth chamfered surface.

In the above technical solution, the fifth surface of the second division member and the seventh surface of the third tube wall are arranged at an acute angle and connected through the third chamfered surface, and/or the sixth surface of the second division member and the eighth surface of the fourth tube wall are arranged at an acute angle and connected through the fourth chamfered surface. This can increase the thicknesses of the portion of the second division member connected to the third tube wall and the portion of the second division member connected to the fourth tube wall in the second direction, thereby, on the one hand, improving the connection stability and reliability between the second division member and the tube walls, and on the other hand, alleviating the problem of cracks occurring between the second division member and the tube walls.

In some embodiments of the first aspect of the present application, the battery further includes a third confluence member and a fourth confluence member, a third confluence chamber is formed inside the third confluence member, and a fourth confluence chamber is formed inside the fourth confluence member, the third confluence member and the fourth confluence member are respectively connected to the two ends of the second thermal management component in the third direction, each of the second flow channels communicates with the third confluence chamber, and each of the second flow channels communicates with the fourth confluence chamber, and any two of the third direction, the second direction and the first direction are perpendicular to each other; two second flow channels located at the ends in the second direction among the plurality of second flow channels are respectively a third end flow channel and a fourth end flow channel, and the cross-sectional area of at least one of the third end flow channel and the fourth end flow channel is smaller than the cross-sectional areas of other second flow channels.

In the above technical solution, the cross-sectional area of at least one of the two second flow channels (the third end flow channel and the fourth end flow channel) located at the ends in the second direction is smaller than the cross-sectional areas of other second flow channels, so that the flow resistance of at least one of the second flow channels located at the ends is larger, and the heat exchange medium flowing out of one of the third confluence member and the fourth confluence member can be distributed to the second flow channel(s) located between the third end flow channel and the fourth end flow channel, which is beneficial to distribute sufficient heat exchange medium to each second flow channel, thereby improving the uniformity of heat exchange.

In some embodiments of the first aspect of the present application, the cross-sectional area of at least one of the third end flow channel and the fourth end flow channel is the smallest among the plurality of second flow channels.

In the above technical solution, if the cross-sectional area of at least one of the third end flow channel and the fourth end flow channel is the smallest among the plurality of second flow channels, the one with the smallest cross-sectional area has the largest flow resistance, and the heat exchange medium is more likely to flow into the second flow channel located between the third end flow channel and the fourth end flow channel, which is beneficial to distribute sufficient heat exchange medium to each second flow channel, thereby improving the uniformity of heat exchange. The cross-sectional areas of the third end flow channel and the fourth end flow channel are the smallest among the plurality of second flow channels. When the first battery cell expands, the amount by which the second thermal management component can be compressed in the corresponding regions of the third end flow channel and the fourth end flow channel in the first direction is smaller than those in the regions between the third end flow channel and the fourth end flow channel, so as to match the expansion amount of different regions of the first battery cell in the second direction to meet the expansion amount requirements of different regions of the first battery cell.

In a second aspect, embodiments of the present application provide an electric device, including at least one battery provided by the embodiments of the first aspect.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other drawings based on the drawings without paying creative efforts.
FIG. 1 is a schematic structural diagram of a vehicle provided by some embodiments of the present application;
FIG. 2 is a schematic structural diagram of a battery provided by some embodiments of the present application;
FIG. 3 is a schematic diagram of fit between battery cells, a first thermal management component, and a second thermal management component provided in some embodiments of the present application;
FIG. 4 is a schematic diagram of fit between battery cells, first thermal management components, and second thermal management components provided in other embodiments of the present application;
FIG. 5 is a sectional view showing battery cells, first thermal management components and second thermal management components, after fitting, provided by some embodiments of the present application;
FIG. 6 is a sectional view of a battery provided by some embodiments of the present application;
FIG. 7 is a sectional view of a battery provided by other embodiments of the present application;
FIG. 8 is a sectional view of a battery provided by still some embodiments of the present application;
FIG. 9 is a sectional view of a battery provided by yet some embodiments of the present application;
FIG. 10 is a schematic structural diagram of a first thermal management component provided by some embodiments of the present application;
FIG. 11 is an enlarged view of part A of FIG. 10;
FIG. 12 is a schematic structural diagram of a second thermal management component provided by some embodiments of the present application; and
FIG. 13 is an enlarged view of part B of FIG. 12.

Reference signs: 1000-vehicle; 100-battery; 10-battery cell; 11-first battery cell; 12-first side surface; 20-first thermal management component; 21-first flow channel; 22-first tube body; 221-first tube wall; 2211-third surface; 222-second tube wall; 2221-fourth surface; 223-first bending wall; 224-second bending wall; 225-first chamfered surface; 226-second chamfered surface; 23-first division member; 231-first surface; 232-second surface; 30-second thermal management component; 31-second flow channel; 32-second tube body; 321-third tube wall; 3211-seventh surface; 322-fourth tube wall; 3221-eighth surface; 323-third bending wall; 324-fourth bending wall; 235-third chamfered surface; 236-fourth chamfered surface; 33-second division member; 331-fifth surface; 332-sixth surface; 40-fixing part; 50-box; 51-first side wall; 52-first part; 53-second part; 54-bottom wall; 60-separation beam; 70-barrier member; 80-first confluence member; 81-first confluence chamber; 82-first medium inlet; 90-second confluence member; 91-second confluence chamber; 92-first medium outlet; 110-third confluence member; 1101-third confluence chamber; 1102-second medium inlet; 120-fourth confluence member; 1201-fourth confluence chamber; 1202-second medium outlet; 200-controller; 300-motor; X-first direction; Y-second direction; Z-third direction.

### Detailed Description of Embodiments

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some of the embodiments, not all of them. Generally, the components of the embodiments of the present application described and shown in the drawing here can be arranged and designed in various configurations.

Therefore, the detailed description of the embodiments of the present application provided in the drawings below is not intended to limit the protection scope of the present application, but only indicate selected embodiments of the present application. Based on the embodiments in the present application, all other embodiments obtained by those of ordinary skill in the art without paying creative efforts fall within the scope of protection of the present application.

It should be noted that without conflict, the embodiments and the features of the embodiments in the present application may be combined with each other.

It should be noted that similar reference numerals and letters represent similar items in the following figures, therefore, once an item is defined in one figure, it does not need to be further defined and explained in subsequent figures.

In the description of the embodiments of the present application, it should be indicated that the orientation or positional relationships are based on orientation or positional relationships shown in the drawings, or the orientation or positional relationships in which the product of the present application is commonly placed when in use, or the orientation or positional relationships of the present application commonly understood by those skilled in the art, only for the convenience of describing the present application and simplifying the description, rather than indicating or implying that the device or element referred to must have a specific orientation, or be constructed and operated in a specific orientation, and therefore cannot be understood as a limitation on the present application. In addition, the terms "first", "second", "third", etc. are only used to distinguish descriptions and shall not be understood as indicating or implying importance in relativity.

"Multiple/plurality of" appearing in the present application means two or more (including two).

In the present application, the battery cell may include lithium ion secondary battery, lithium ion primary battery, lithium sulfur battery, sodium lithium ion battery, sodium ion battery or magnesium ion battery, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and soft-package battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box for packaging one or more battery cells or more battery modules. The box may prevent a liquid or other foreign object from affecting the charging or discharging of the battery cells.

The battery cell includes a shell, at least one electrode assembly and an electrolytic solution. The shell is used to accommodate the at least one electrode assembly and the electrolytic solution. The electrode assembly consists of a positive electrode plate, a negative electrode plate and a separator. The battery cell works mainly by moving metal ions between the positive electrode plate and negative electrode plate.

At present, from the perspective of the development of the market situation, the application of power batteries is becoming more and more extensive. The power batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of power battery application fields, its market demand is also constantly increasing.

The inventors have found that in general power batteries, in order to obtain sufficient power for the battery, a plurality of battery cells in the battery box are usually provided in an arrangement way. However, battery cells generate a lot of heat during the continuous charging and discharging processes, which will cause increased internal temperature of the battery. The structure in which the plurality of battery cells are stacked will aggravate this phenomenon, which will seriously affect the use performance and service life of the battery. In severe cases, it will cause safety accidents such as fire and explosion, which is not conducive to electrical safety. Therefore, thermal management components are usually provided inside the battery. A middle thermal management component may be provided between each adjacent battery cells in the stacking direction of the battery cells, and an end thermal management component may also be provided on the side of the battery cell at the end facing away from the adjacent battery cell. During the expansion of the battery cells, the thermal management components may be compressed and deformed in the stacking direction of the battery cells to absorb the expansion of the battery cells. The middle thermal management component needs to absorb the expansion of the battery cells on both sides, and the end thermal management component only needs to absorb the expansion of the battery cell on one side. Therefore, the actual compression amount of the end wall thermal management component is only half of the compression amount of the middle thermal management component. However, in the related art, the thickness of the end thermal management component is the same as the thickness of the middle thermal management component in the stacking direction of the battery cells, which not only makes the thickness of the end thermal management component much greater than the maximum compression amount that the end thermal management component needs to be compressed in the stacking direction of the battery cells, but also results in that the end thermal management component occupies a larger space in the stacking direction of the battery cells, thereby reducing the energy density of the battery.

Based on the above consideration, in order to alleviate the problem of low energy density of the battery caused by the large space occupied by the end thermal management component in the related art, the inventors have designed a battery after in-depth researches. The battery includes a plurality of battery cells, wherein the plurality of battery cells are stacked in a first direction, the plurality of battery cells include two first battery cells located at two ends in the first direction, two adjacent battery cells are provided therebetween with at least one first thermal management component, and one side of at least one of the first battery cells away from the first thermal management component in the first direction X is provided with at least one second thermal management component, where in the first direction X, the thickness of the at least one second thermal management component is less than the thickness of the at least one first thermal management component.

When the first battery cell expands in a direction away from the first thermal management component, the at least one second thermal management component provided on the side of the first battery cell away from the first thermal management component may be compressed in the first direction to absorb the expansion of the first battery cell in the direction away from the first thermal management component. The thickness of the at least one second thermal management component as a whole provided on the side of the first battery cell away from the first thermal management component is less than the thickness of the at least one first thermal management component as a whole provided between two adjacent battery cells, so that the amount by which the at least one second thermal management component provided on the side of the first battery cell away from the first thermal management component may be compressed in the first direction matches the amount of expansion of the first battery cell in the direction away from the first thermal management component, thereby meeting the expansion requirement of the first battery cell in the direction away from the first thermal management component, and reducing the space occupied by the second thermal management component in the first direction, which is beneficial to improving the energy density of the battery.

In addition, since the first thermal management component needs to absorb the expansion of the battery cells on two sides thereof in the first direction, the second thermal management component is only provided to absorb the expansion of the first battery cell on one side thereof in the first direction. The thickness of the at least one second thermal management component as a whole provided on the side of the first battery cell away from the first thermal management component is less than the thickness of the at least one first thermal management component as a whole provided between two adjacent battery cells. When the first thermal management component is compressed to the limit in the first direction, the second thermal management component is also compressed to the limit in the first direction or the space where the second thermal management component can be further compressed in the first direction is very small. In this way, after the first thermal management component is compressed to the limit in the first direction, the first battery cell cannot continue to expand in the direction away from the first thermal management component or the expansion amount of the first battery cell in the direction away from the first thermal management component is very small, which is conducive to making the first battery cell and the battery cell(s) located between the two first battery cells tend to have consistent expansion amount in the first direction, thereby reducing the risk of the first battery cell that the first battery cell has larger expansion amount in the first direction due to the larger amount by which the second thermal management component may be compressed in the first direction, to thereby result in that the shell of the first battery cell is damaged due to expansion.

The battery disclosed in the embodiments of the present application can be used in, but is not limited to, vehicles, ships, aircraft or other electric devices. The battery disclosed in the present application can be used to form a power supply system for the electrical device, which helps to save space occupied by the end thermal management components and improve the energy density of the battery.

Embodiments of the present application provide an electric device using the battery as the power supply. The electric device may be, but not limited to a mobile phone, a panel computer, a notebook computer, an electric toy, an electric tool, an electric power cart, an electric vehicle, a ship, a spacecraft or the like. In the above, the electric toy includes a fixed or mobile electric toy, such as a game console, an electric car toy, an electric ship toy, or an electric aircraft toy. The spacecraft includes an airplane, a rocket, a space shuttle, a spaceship, or the like.

For convenient description, the following embodiments are described by taking a vehicle 1000 as an electrical device of an embodiment of the present application as example.

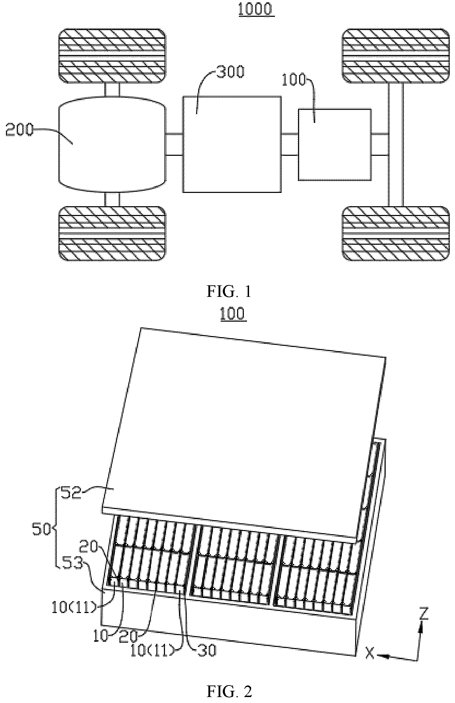

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

As shown in FIG. 2, FIG. 3 and FIG. 4, in some embodiments, the battery 100 includes a plurality of battery cells 10, wherein the plurality of battery cells 10 are stacked in a first direction X, the plurality of battery cells 10 include two first battery cells 11 located at two ends in the first direction X, two adjacent battery cells 10 are provided therebetween with at least one first thermal management component 20, and one side of at least one of the first battery cells 11 away from the first thermal management component 20 in the first direction X is provided with at least one second thermal management component 30, where in the first direction X, the thickness of the at least one second thermal management component 30 is less than the thickness of the at least one first thermal management component 20.

The battery cell 10 refers to the smallest unit constituting the battery 100. The "plurality of" refers to two or more than two. The plurality of battery cells 10 may be in serial, parallel or hybrid connection with each other. The hybrid connection means that the plurality of battery cells 10 are connected with each other both in series and in parallel. The battery 100 may further include other structures. For example, the battery 100 may further include a busbar member (not shown in the drawings) for realizing electrical connection between the plurality of battery cells 10.

The battery 100 may include a plurality of columns of battery cells 10, the plurality of columns of battery cells 10 are arranged in the third direction Z, and each column of battery cells 10 include a plurality of battery cells 10 stacked in the first direction X. It should be noted that, in other embodiments, the battery 100 may also only include a plurality of battery cells 10 stacked in the first direction X. That is, the battery 100 only includes one column of battery cells 10 arranged in the first direction X. Each column of battery cells 10 may include one or more battery module. The columns of battery cells 10 may share the first thermal management component 20 and the second thermal management component 30.

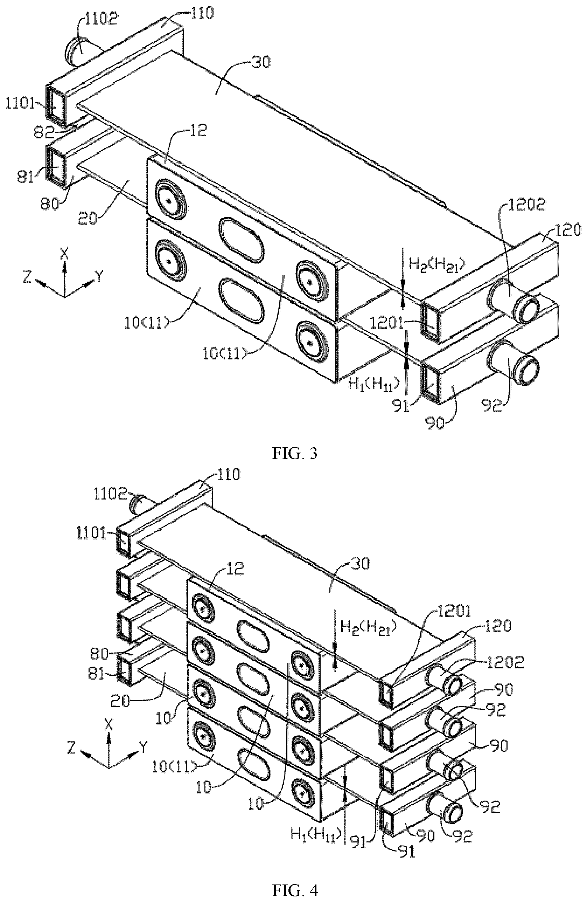

In the above, each battery cell 10 may be a secondary battery 100 or a primary battery 100; or may also be a lithium-sulfur battery 100, a sodium-ion battery 100 or a magnesium-ion battery 100, but is not limited thereto. The battery cell 10 may be in a shape of cylinder, flat body, cuboid or in other shape. Exemplarily, as shown in FIG. 3 and FIG. 4, the battery cell 10 is in the shape of a cuboid, the first direction X is the thickness direction of the battery cell 10, and the third direction Z is the length direction of the battery cell 10.

The first thermal management component 20 and the second thermal management component 30 are both used to adjust the temperature of the battery cell 10. In the above, the first thermal management component 20 and the second thermal management component 30 may be used to reduce the temperature of the battery cell 10, or may be used to increase the temperature of the battery cell 10.

Referring to what is shown in FIG. 3 and FIG. 4, in the first direction X, the battery cell 10 has a first side surface 12, the first side surface 12 is a surface with the largest area among the outer surfaces of the battery cells 10, and two sides of the first thermal management component 20 in the first direction X abut against the first side surfaces 12 of the two battery cells 10. The first side surface 12 of the first battery cell 11 facing away from the first thermal management component 20 abuts against the second thermal management component 30.

It should be noted that the battery cell 10 is in a cuboid structure, where the first side surface 12 is the surface with the largest area among the outer surfaces of the battery cell 10, that is, the first side surface 12 is the outer surface of the side of the battery cell 10 in the thickness direction of the battery cell 10. That is, the first thermal management component 20 is provided between two adjacent battery cells 10 in the thickness direction of the battery cell 10, and the first thermal management component 20 abuts against the first side surface 12 of the battery cell 10 to achieve heat exchange between the battery cell 10 and the first thermal management component 20. The second thermal management component 30 is provided on the side of the first battery cell 11 away from the first thermal management component 20 in the thickness direction of the battery cell 10, and the second thermal management component 30 abuts against the first side surface 12 of the first battery cell 11 away from the first thermal management component 20 to achieve heat exchange between the first battery cell 11 and the second thermal management component 30.

In the first direction X, the thickness of the first thermal management component 20 is the size of the first thermal management component 20 in the first direction X, which is the distance between two surfaces of the first thermal management component 20 opposite to each other in the first direction X, namely H₁₁ in FIG. 3 and FIG. 4. In the first direction X, the thickness of the at least one first thermal management component 20 between two adjacent battery cells 10 is the maximum size, in the first direction X, of all first thermal management components 20 as a whole located between two adjacent battery cells 10. The thickness of the at least one first thermal management component 20 disposed between two adjacent battery cells 10 is defined as H₁.

The first direction X is the thickness direction of the first thermal management component 20.

Two adjacent battery cells 10 may be provided therebetween with one first thermal management component 20, or a plurality of first thermal management components 20, where the plurality refers to two or more than two. In an embodiment where a plurality of first thermal management components 20 are disposed between two adjacent battery cells 10, between the two adjacent battery cells 10, two adjacent first thermal management components 20 may be surface-bonded to each other, or two adjacent first thermal management components 20 may be connected into an integral structure by bonding, welding, or the like. The battery cell 10 may be connected to the adjacent first thermal management component 20, for example, the first thermal management component 20 may be bonded to the surface of the shell of the adjacent battery cell 10, or the first thermal management component 20 may be welded to the shell of the adjacent battery cell 10. The first thermal management component 20 may also be attached to the surface (first side surface 12) of the battery cell 10 adjacent thereto, or a thermally conductive component such as a thermally conductive pad or thermally conductive adhesive may be provided between the first thermal management component 20 and the surface (first side surface 12) of the battery cell 10 adjacent thereto.

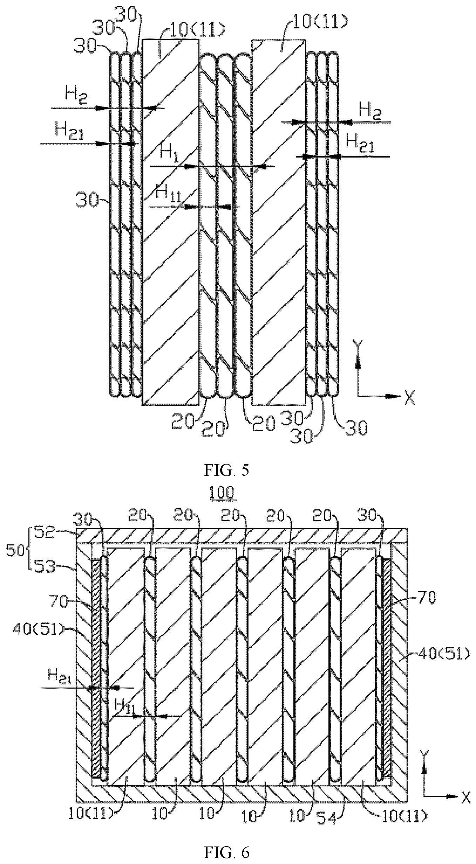

In the embodiment where one first thermal management component 20 is disposed between two adjacent battery cells 10, the thickness of the one first thermal management component 20 in the first direction X is the thickness of the at least one first thermal management component 20 between the two adjacent battery cells 10. In the embodiment where a plurality of first thermal management component 20 are disposed between two adjacent battery cells 10, the distance between the surfaces, away from each other, of the two first thermal management components 20 located at the ends of the row with the largest number of those stacked in the first direction X is the thickness of the at least one first thermal management component 20 between the two adjacent battery cells 10. The first direction X is perpendicular to the second direction Y. Exemplarily, five first thermal management components 20 are provided between two adjacent battery cells 10. The five first thermal management components 20 are divided into a first row and a second row which are arranged side by side in the second direction Y. The first row includes two first thermal management components 20 stacked in the first direction X, and the second row includes three first thermal management components 20 stacked in the first direction X. The thickness of the at least one first thermal management component 20 between the two adjacent battery cells 10 is the distance between the surfaces, away from each other, of the two first thermal management components 20 of the second row located at two ends in the first direction X. In the embodiment where a plurality of first thermal management components 20 stacked in a first direction X are provided between two adjacent battery cells 10 and the surfaces of two adjacent first thermal management components 20 are directly attached to each other, the thickness H₁ of the at least one first thermal management component 20 between two adjacent battery cells 10 is the sum of the thicknesses H₁₁ of the plurality of first thermal management components 20 (shown in FIG. 5).

In the first direction X, the thickness of the second thermal management component 30 is the size of the second thermal management component 30 in the first direction X, which is the distance between two surfaces of the second thermal management component 30 opposite to each other in the first direction X, namely H₂₁ in FIG. 3 and FIG. 4. In the first direction X, the thickness of the at least one second thermal management component 30 located on the side of the first battery cell 11 away from the first thermal management component 20 is the maximum size, in the first direction X, of all the second thermal management components 30 as a whole located on the side of the first battery cell 11 away from the first thermal management component 20. The thickness of the at least one second thermal management component 30 of one first battery cell 11 disposed away from the first thermal management component 20 is defined as H₂. The first direction X is also the thickness direction of the second thermal management component 30.

It may be that one side of one first battery cell 11 away from the first thermal management component is provided with at least one second thermal management component 30. It may also be that one sides of two first battery cells 11 away from the first thermal management component 20 are each provided with at least one second thermal management component 30. One side of the first battery cell 11 away from the first thermal management component 20 may be provided with one second thermal management component 30, or may also be provided with a plurality of second thermal management components 30, where the plurality refers to two or more than two. In an embodiment where a plurality of second thermal management components 30 are disposed at one side of the first battery cell 11 away from the first thermal management component 20, two adjacent second thermal management components 30 may be in surface contact with each other, or two adjacent second thermal management components 30 may be connected into an integral structure by bonding, welding, or the like. The first battery cell 11 may be connected to the adjacent second thermal management component 30, for example, the second thermal management component 30 may be bonded to the surface of the shell of the first battery cell 11, or the second thermal management component 30 may be welded to the shell of the first battery cell 11. The second thermal management component 30 may also be in contact with the surface of the shell of the first battery cell 11, or a heat-resistant component such as a heat-resistant pad may be provided between the second thermal management component 30 and the surface of the shell of the first battery cell 11.

In the embodiment where at least one second thermal management component 30 is provided on the sides of the two first battery cells 11 away from the first thermal management component 20, the number of the second thermal management components 30 on the sides of the two first battery cells 11 away from the first thermal management component 20 may be the same or different.

In an embodiment where one second thermal management component 30 is provided on the side of the first battery cell 11 away from the first thermal management component 20, the thickness of the one second thermal management component 30 in the first direction X is the thickness of the at least one second thermal management component 30 on the side of the first battery cell 11 away from the first thermal management component 20. In an embodiment where a plurality of second thermal management components 30 are provided on the side of the first battery cell 11 facing away from the first thermal management component 20, the distance between the surfaces, away from each other, of two second thermal management components 30 located at two ends of a row with the largest number of those stacked in the first direction X is the thickness of the at least one second thermal management component 30 on the side of the first battery cell 11 facing away from the first thermal management component 20. Exemplarily, five second thermal management components 30 are provided on the side of the first battery cell 11 away from the first thermal management component 20. The five second thermal management components 30 are divided into a third row and a fourth row which are arranged side by side in the second direction Y. The third row includes two second thermal management components 30 stacked in the first direction X, and the fourth row includes three second thermal management components 30 stacked in the first direction X. The thickness of the at least one second thermal management component 30 on the side of the first battery cell 11 away from the first thermal management component 20 is the distance between the surfaces, away from each other, of the two second thermal management components 30 of the fourth row located at two ends in the first direction X. In the embodiment where a plurality of second thermal management components 30 stacked in the first direction X are provided on the side of the first battery cell 11 away from the first thermal management component 20 and the surfaces of two adjacent second thermal management components 30 are directly attached to each other, the thickness H₂ of the at least one second thermal management component 30 on the side of the first battery cell 11 away from the first thermal management component 20 is the sum of the thicknesses H₂₁ of the plurality of second thermal management components 30 (shown in FIG. 5).

In the embodiment where the battery 100 includes two battery cells 10, the two battery cells 10 are stacked in the first direction X, and the two battery cells 10 are two first battery cells 11. At least one first thermal management component 20 is disposed between the two first battery cells 11, and at least one thermal management component is disposed on a side of the first battery cell 11 facing away from the first thermal management component 20.

When the first battery cell 11 expands in a direction away from the first thermal management component 20, the at least one second thermal management component 30 disposed on the side of the first battery cell 11 away from the first thermal management component 20 may be compressed in the first direction X to absorb the expansion of the first battery cell 11 in the direction away from the first thermal management component 20. Since only one side of the second thermal management component 30 in the first direction X is provided with the battery cell 10 and two sides of the first thermal management component 20 in the first direction X are each provided with the battery cell 10, the compression amount of the second thermal management component 30 absorbing the expansion of the battery cell 10 is less than the compression amount of the first thermal management component 20 absorbing the expansion of the battery cell 10.

Therefore, the thickness of the at least one second thermal management component 30 as a whole provided on the side of the first battery cell 11 away from the first thermal management component 20 is less than the thickness of the at least one first thermal management component 20 as a whole provided between two adjacent battery cells 10, so that the amount by which the at least one second thermal management component 30 provided on the side of the first battery cell 11 away from the first thermal management component 20 may be compressed in the first direction X matches the amount of expansion of the first battery cell 11 in the direction away from the first thermal management component 20, thereby meeting the expansion requirement of the first battery cell 11 in the direction away from the first thermal management component 20, and reducing the space occupied by the second thermal management component 30 in the first direction X, which is beneficial to improve the energy density of the battery 100.

In addition, since the first thermal management component 20 needs to absorb the expansion of the battery cells 10 on two sides thereof in the first direction X, the second thermal management component 30 is only provided to absorb the expansion of the first battery cell 11 on one side thereof in the first direction X. The thickness of the at least one second thermal management component 30 as a whole provided on the side of the first battery cell 11 away from the first thermal management component 20 is less than the thickness of the at least one first thermal management component 20 as a whole provided between two adjacent battery cells 10. When the first thermal management component 20 is compressed to the limit in the first direction X, the second thermal management component 30 is also compressed to the limit in the first direction X or the space where the second thermal management component 30 can be further compressed in the first direction X is very small. In this way, after the first thermal management component 20 is compressed to the limit in the first direction X, the first battery cell 11 cannot continue to expand in the direction away from the first thermal management component 20 or the expansion amount of the first battery cell 11 in the direction away from the first thermal management component 20 is very small, which is conducive to making the first battery cell 11 and the battery cell(s) 10 located between the two first battery cells 11 tend to have consistent expansion amount in the first direction X, thereby reducing the risk of the first battery cell 11 that the first battery cell 11 has larger expansion amount in the first direction X due to the larger amount by which the second thermal management component 30 may be compressed in the first direction X, to thereby result in that the shell of the first battery cell 11 is damaged due to expansion.

As shown in FIG. 6 to FIG. 9, in some embodiments, the battery 100 further includes two fixing parts 40, where in the first direction X, the two fixing parts 40 are located on two sides of the plurality of battery cells 10, the at least one first thermal management component 20 abuts between two adjacent battery cells 10, and the at least one second thermal management component 30 abuts between the fixing part 40 and the first battery cell 11.

In the first direction X, the two fixing parts 40 are spacedly arranged opposite to each other, and the two fixing parts 40 define an accommodation space therebetween. One fixing part 40 and one first battery cell 11 define therebetween a first space for accommodating the at least one second thermal management component 30. The surface of the at least one second thermal management component 30 (the at least one second thermal management component 30 located on the side of the first battery cell 11 away from the first thermal management component 20 is regarded as a whole) facing the first battery cell 11 abuts against the first battery cell 11, and the surface of the at least one second thermal management component 30 facing the fixing part 40 abuts against the fixing part 40. The second thermal management components 30 may be connected to each other, for example, the second thermal management component 30 is bonded to the surface of the second thermal management component 30 adjacent thereto or the fixing part 40 is welded to the surface of the second thermal management component 30 adjacent thereto. The fixing part 40 may also be in contact with the surface of the second thermal management component 30 adjacent thereto, or a thermally conductive component 30 such as a thermally conductive pad may be provided between the fixing part 40 and the second thermal management component 30 adjacent thereto.

The fixing part 40 is fixed in position. When the battery cells 10 expand, the first battery cell 11 and the fixing part 40 interact with each other so that the second thermal management component 30 is compressed in the first direction X. The two adjacent batteries 100 interact with each other in one direction so that the first thermal management component 20 is compressed in the first direction X.

During the process that the battery cells 10 expand in the first direction X and the first thermal management component 20 and the second thermal management component 30 are compressed in the first direction X, the fixing part 40 does not have deformation in the first direction X that is visible to the naked eye.

The battery 100 further includes two fixing parts 40, the two fixing parts 40 are located on two sides of the plurality of battery cells 10 in the first direction X, the at least one first thermal management component 20 abuts between two adjacent battery cells 10, and the at least one second thermal management component 30 abuts between the fixing part 40 and the first battery cell 11. The arrangement of the fixing parts 40 may limit the whole structure formed by all battery cells 10, first thermal management component 20 and second thermal management component 30, facilitating the stable installation of the battery cells 10, first thermal management component 20 and second thermal management component 30, so as to keep stable relative position relationship between the battery cells 10, first thermal management component 20 and second thermal management component 30.

The fixing part 40 may be formed in various ways. In some embodiments, as shown in FIG. 4, the battery 100 further includes a box 50, and the plurality of battery cells 10, the at least one first thermal management component 20 and the at least one second thermal management component 30 are accommodated in the box 50; and the box 50 includes two first side walls 51 arranged opposite to each other in the first direction X, and the first side walls 51 form the fixing parts 40.

The box 50 provides accommodation space for the battery cells 10, the first thermal management component(s) 20 and the second thermal management component(s) 30. The plurality of battery cells 10 may be in direct serial, parallel or hybrid connection with each other, and then the whole composed of the plurality of battery cells 10 is accommodated in the box 50. Certainly, the battery 100 may be formed in the way that the plurality of battery cells 10 are first in serial or in parallel or in hybrid connection with each other to form battery modules, and then the plurality of battery modules are in serial or in parallel or in hybrid connection with each other to form a whole, and accommodated in the box 50.

The box 50 may be in various structures. In some embodiments, the box 50 may include a first part 52 and a second part 53. The first part 52 and the second part 53 cover each other. The first part 52 and the second part 53 jointly define an accommodation space for accommodating the battery cells 10. The second part 53 may be in a hollow structure with one end open to form the accommodation cavity for accommodating the battery cells 10, the first thermal management component(s) 20 and the second thermal management component(s) 30, and the first part 52 may be in a plate-like structure. The first part 52 covers the open side of the second part 53, so that the first part 52 and the second part 53 jointly define the accommodation space; and the first part 52 and the second part 53 may also be both in a hollow structure with one side open to form the accommodation cavity for accommodating the battery cells 10, the first thermal management component(s) 20 and the second thermal management component(s) 30, and the open side of the first part 52 covers the open side of the second part 53. Of course, the box 50 formed by the first part 52 and the second part 53 may be in various shapes, such as a cylinder, a cuboid and so on.

The two first side walls 51 may be two side walls, opposite to each other in the first direction X, of the portion of the box 50 having the opening. The side walls of the portion of the box 50 having the opening are arranged around the periphery of the bottom wall 54 of the portion and have one ends connected to the bottom wall 54, and the other ends of the side walls enclose to form the opening of the portion of the box 50.

The first side walls 51 of the box 50 form the fixing parts 40, so there is no need to separately provide a structure to form the fixing part 40, which is beneficial to simplify the structure of the battery 100 and reduce the weight of the battery 100.

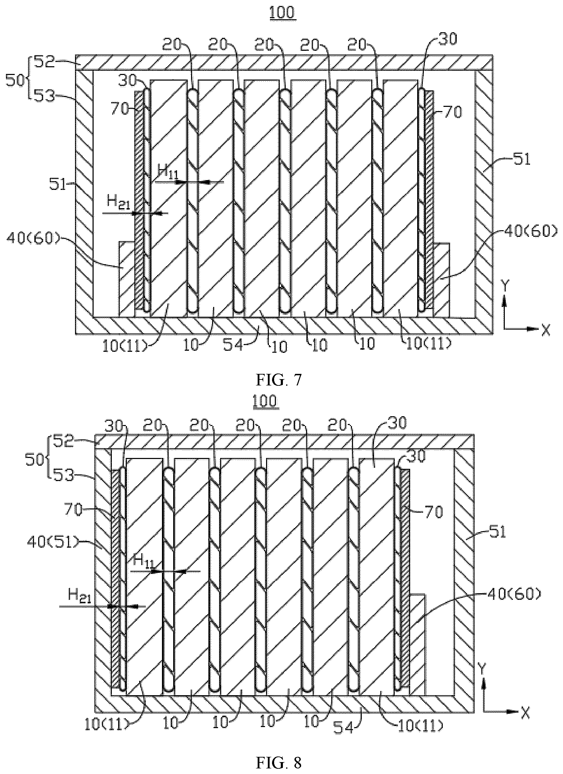

As shown in FIG. 7, in other embodiments, the battery 100 further includes a box 50, and the plurality of battery cells 10, the at least one first thermal management component 20 and the at least one second thermal management component 30 are accommodated in the box 50; and the battery 100 further includes separation beam(s) 60, the separation beam(s) 60 is installed inside the box 50, and the separation beam(s) 60 forms the fixing part 40.

The separation beam(s) 60 may divide the space inside the box 50 into a plurality of sub-spaces, each of which is used to accommodate one or more battery modules. There may be one or more separation beams 60. In an embodiment where there are a plurality of separation beams 60, the two fixing part 40 may also be both formed by the separation beams 60.

The separation beam 60 may be connected to the bottom wall 54 of the box 50, or may be connected to the side wall of the box 50, or the separation beam 60 may be connected to both the bottom wall 54 and the side wall of the box 50. The separation beam 60 may be detachably installed in the box 50. For example, the separation beam 60 may be detachably installed in the box 50 by bolts, screws, etc. The separation beam 60 may be fixedly installed in the box 50. For example, the separation beam 60 may be connected to the box 50 by welding.

The separation beams 60 are installed inside the box 50, and the separation beams 60 form the fixing parts 40. Then, the expansion force of each battery cell 10 during expanding indirectly acts on the separation beam 60, reducing the damage of the expansion force of the battery cell 10 to the box 50 during expansion.

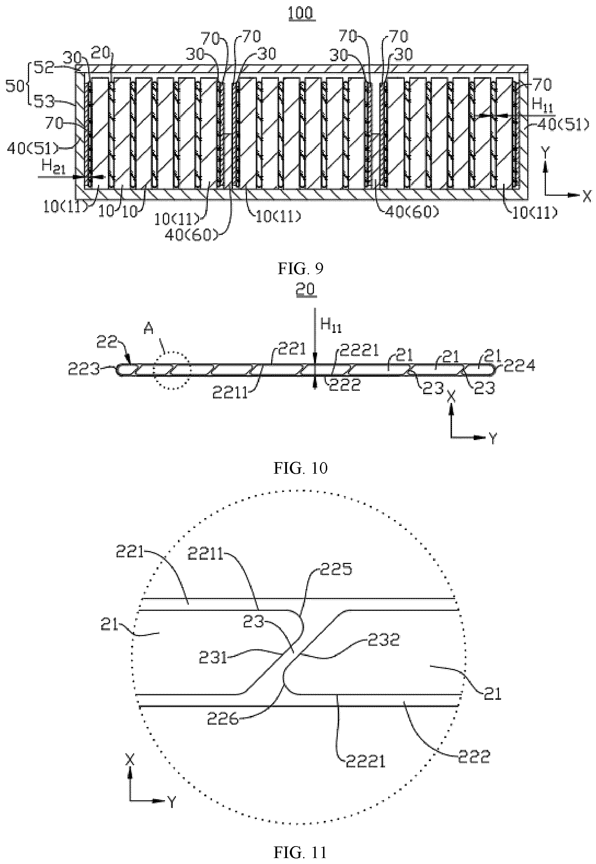

Since the battery 100 includes two fixing parts 40, as shown in FIG. 8, in some embodiments, one of the two fixing parts 40 may be a separation beam 60, and the other of the two fixing parts 40 may be a first side wall 51 of the box body 50. As shown in FIG. 9, in some embodiments, the battery 100 includes two fixing parts 40 formed by two separation beams 60, and includes two fixing parts 40 formed by one first side wall 51 and one separation beam 60 respectively.

As shown in FIG. 6 to FIG. 9, in some embodiments, the battery 100 further includes barrier members 70, where in the first direction X, the barrier member 70 abuts between the at least one second thermal management component 30 and the fixing part 40, and the thermal resistance of the barrier member 70 is greater than the thermal resistance of the second thermal management component 30.

The barrier member 70 may be clamped by the fixing part 40 and the second thermal management component 30 adjacent to the fixing part 40, and the barrier member 70 and the fixing part 40 may be in surface contact with each other and the barrier member 70 and the second thermal management component 30 may be in surface contact with each other. The barrier member 70 may be also connected to the fixing part 40 and/or the second thermal management component 30. For example, the barrier member 70 is connected to the fixing part 40 and/or the second thermal management component 30 by bonding, or the barrier member 70 is connected to the fixing part 40 and/or the second thermal management component 30 by welding.

The thermal resistance is a comprehensive parameter reflecting the ability to prevent heat transfer. The smaller the thermal resistance is, the weaker the heat transfer ability is; and the smaller the thermal resistance is, the stronger the heat transfer ability is. The barrier member 70 abuts between the at least one second thermal management component 30 and the fixing part, so that the barrier member 70 may inhibit heat transfer between the second thermal management component 30 and the fixing part 40, and the heat transfer ability between the second management component and the first battery cell 11 is better than the heat transfer ability between the second thermal management 30 component 30 and the fixing part 40. The barrier member 70 may be a plastic, thermal insulation coating, etc. The barrier member 70 may also be in a plate-shaped structure, a fin structure, etc., which is not limited in the present application.

The barrier member 70 abuts between the at least one second thermal management component 30 and the fixing part 40, and the thermal resistance of the barrier member 70 is greater than the thermal resistance of the second thermal management component. The barrier member 70 can effectively hinder heat transfer between the second thermal management component 30 and the blocking part, so that the second thermal management component 30 is difficult to exchange heat with the fixing part 40, thereby enabling the second thermal management component 30 to efficiently exchange heat with the first battery cell 11, thereby adjusting the temperature of the first battery cell 11.

As shown in FIG. 3, FIG. 3, and FIG. 6 to FIG. 9, in some embodiments, one first thermal management component 20 is provided between two adjacent battery cells 10; and/or one second thermal management component 30 is provided on a side of the first battery cell 11 away from the first thermal management component 20 in the first direction X.

It may be that one first thermal management component 20 is disposed between the two first battery cells 11, and a plurality of second thermal management component 30 are disposed on a side of the first battery cell 11 facing away from the first thermal management component 20 in the first direction X. It may also be that one second thermal management component 30 is disposed on one side of the first battery cell 11 away from the first thermal management component 20 in the first direction X, and a plurality of first thermal management components 20 are provided between the adjacent battery cells 10. It may also be that one first thermal management component 20 is provided between two adjacent battery cells 10; and one second thermal management component 30 is provided on a side of the first battery cell 11 away from the first thermal management component 20 in the first direction X.

If two adjacent battery cells 10 is provided therebetween with one first thermal management component 20, the temperature of the battery cells 10 can be adjusted with a minimum number of first thermal management components 20, which is beneficial to simplify the battery 100 structure, reduce the volume of the battery 100 and save the cost of the battery 100. It can also reduce the space occupied by all first thermal management components 20, which is beneficial to improve the energy density of the battery 100. If one side of the first battery cell 11 away from the first thermal management component 20 in the first direction X is provided with one second thermal management component 30, the temperature of the battery cells 10 can be adjusted with a minimum number of second thermal management components 30, which is beneficial to simplify the battery 100 structure, reduce the volume of the battery 100 and save the cost of the battery 100. It can also reduce the space occupied by all second thermal management components 30, which is beneficial to improve the energy density of the battery 100.

In some embodiments, in the first direction X, the thickness of the second thermal management component 30 is less than the thickness of the first thermal management component 20. That is, H₂₁<H₁₁ in the drawings.

The thickness of the second thermal management component 30 in the first direction X is less than the thickness of the first thermal management component 20 in the first direction X, which can reduce the space occupied by the second thermal management component 30 in the first direction X and is beneficial to improve the energy density of the battery 100.

In other embodiments, in the first direction X, the thickness of the first thermal management component 20 may also be equal to the thickness of the second thermal management component 30. In such embodiments, the number of first thermal management components 20 between two adjacent battery cells 10 should be greater than the number of second thermal management components 30 on the side of the first battery cell 11 away from the first thermal management components 20 in the first direction X, so that the thickness of the at least one first thermal management component 20 between two adjacent battery cells 10 is greater than the thickness of the at least one second thermal management component 30 on the side of the first battery cell 11 away from the first thermal management component 20 in the first direction X.

In some embodiments, a first flow channel 21 for accommodating a heat exchange medium is formed inside the first thermal management component 20.

The first thermal management component 20 may be of a plate-like structure provided therein with a first flow channel 21 for accommodating a heat exchange medium. The heat exchange medium in the first flow channel 21 may be water, air, a mixture of water and ethylene glycol, a refrigerant, a phase change material, etc., and the heat exchange medium may be circulating. In other embodiments, the heat exchange medium in the first flow channel 21 may also be solid, such as paraffin, etc. The heat exchange function can be achieved through the change of state of the heat exchange medium. For example, when paraffin changes from solid to liquid, it can absorb heat to achieve the effect of cooling the battery cell 10. The first thermal management component 20 may also be called a water cooling plate, a liquid cooling plate, a heat exchange plate, a temperature regulating plate, etc.

A first flow channel 21 for accommodating a heat exchange medium is formed inside the first thermal management component 20, and the heat exchange medium is accommodated in the first flow channel 21, so that the first thermal management component 20 can realize the temperature regulation function of the battery cell 10. The configuration of the first flow channel 21 also provides a space for the first thermal management component 20 to be compressed in the first direction X, so that the first thermal management component 20 can absorb the expansion of the battery cell 10 by being compressed, thereby meeting the expansion requirements of the battery cell 10.

In some embodiments, a plurality of first flow channels 21 are formed inside the first thermal management component 20, where the plurality of first flow channels 21 are arranged side by side in a second direction Y, and the second direction Y is perpendicular to the first direction X.

The second direction Y is the width direction of the first thermal management component 20.

Each first flow channel 21 extends in the third direction Z. The extending direction of the first flow channel 21 is the flow direction of the heat exchange medium in the first flow channel 21. The third direction Z is the length direction of the first thermal management component 20. Any two of the third direction Z, the second direction Y and the first direction X are perpendicular to each other.

The plurality of first flow channels 21 arranged side by side in the second direction Y are formed inside the first thermal management component 20, which facilitates controlling the flow velocity and flow rate of the heat exchange medium in the first thermal management component 20.

In some other embodiments, only one first flow channel 21 may be formed inside the first heat management component 20, so that the structure of the first heat management component 20 is simpler.

In some embodiments, the first thermal management component 20 includes a first tube body 22 and at least one first division member 23 disposed inside the first tube body 22, and the at least one first division member 23 divides the internal space of the first tube body 22 into a plurality of first flow channels 21.

The first division member 23 extends in the third direction Z to divide the internal space of the first tube body 22 into a plurality of first flow channels 21 extending in the third direction Z. There may be one or more first division member 23. In the embodiment where there are a plurality of first division members 23, the plurality of first division members 23 are spacedly arranged in the second direction Y. In the second direction Y, the spacings between two adjacent first division members 23 may be the same or different. In the second direction Y, the distance between the first division members 23 gradually decreases from the middle to two sides. In an embodiment where there are plurality of first division members 23, in the second direction Y, the maximum distance between the first bent portion (shown in FIG. 10 and described below) and the first division member 23 closest thereto is smaller than the distance between any two adjacent first division members 23, and the maximum distance between the second bent portion (shown in FIG. 10 and described below) and the first division member 23 closest thereto is smaller than the distance between any two adjacent first division members 23.

The first division member 23 is connected inside the first tube body 22. The first division member 23 and the first tube body 22 may be provided separately, and then connected inside the first tube body 22 by welding, bonding, or the like. The first division member 23 and the first tube body 22 may be connected fixedly by e.g., welding, bonding, etc., to improve the stability of each first flow channel 21. The first division member 23 and the first tube body 22 may also be detachably connected, the first tube body 22 is provided therein with a slot (not shown in the drawings) for allowing the first division member 23 to be inserted/snapped thereinto, and the first division member 23 is inserted/snapped into the slot to achieve detachable connection with the first tube body 22.

In other embodiments, the first tube body 22 and the first division member 23 may also be integrally formed.

The at least one first division member 23 is provided in the internal space of the first tube body 22, to divide the internal space of the first tube body 22 into the plurality of first flow channels 21 for accommodating the heat exchange medium, so as to facilitate controlling the flow velocity and flow rate of the heat exchange medium in the first thermal management component 20.

As shown in FIG. 10 and FIG. 11, in some embodiments, in the first direction X, the first tube body 22 includes a first tube wall 221 and a second tube wall 222 provided opposite to each other, and the first division member 23 is obliquely provided between the first tube wall 221 and the second tube wall 222 and connected to the first tube wall 221 and the second tube wall 222.

The first tube wall 221 and the second tube wall 222 are both straight walls. The first tube wall 221 and the second tube wall 222 are provided opposite to each other in the first direction X, that is, the first tube wall 221 and the second tube wall 222 are provided spacedly and facing each other in the first direction X. The first direction X is the thickness direction of the first tube wall 221 and the second tube wall 222, that is, the first tube wall 221 and the second tube wall 222 are provided spaced from and parallel to each other.

The first tube body 22 also includes a first bending wall 223 and a second bending wall 224 that are arranged opposite to each other in the second direction Y. One end of the first tube wall 221 in the second direction Y and one end of the second tube wall 222 in the second direction Y are respectively connected to two ends of the first bending wall 223 in the first direction X. The other end of the first tube wall 221 in the second direction Y and the other end of the second tube wall 222 in the second direction Y are respectively connected to two ends of the second bending wall 224 in the first direction X. The first tube wall 221, the first bending wall 223, the second tube wall 222 and the second bending wall 224 are sequentially connected end to end to together define an internal space of the first tube body 22. One first flow channel 21 is formed between the first bending wall 223 and the first division member 23, and one first flow channel 21 is formed between the second bending wall 224 and the first division member 23.

The first bending wall 223 and the second bending wall 224 are each of a bending structure connected between the first tube wall 221 and the second tube wall 222. The first bending wall 223 and the second bending wall 224 can have various bending directions. For example, the first bending wall 223 and the second bending wall 224 are arc-shaped, V-shaped, etc.

In other embodiments, two straight walls may be used to replace the first bending wall 223 and the second bending wall 224.

The first division member 23 is obliquely disposed between the first tube wall 221 and the second tube wall 222 and is connected to the first tube wall 221 and the second tube wall 222, that is, the first tube wall 221 and the second tube wall 222 are not vertically connected to the first division member 23.

By making the first division member 23 obliquely provided and connected between the first tube wall 221 and the second tube wall 222, the first thermal management component 20 can be compressed and deformed in the first direction X to absorb the expansion of the battery cell 10, thereby reducing the difficulty of compressing the first thermal management component 20 in the first direction X.

In some embodiments, the first division member 23 has a first surface 231 and a second surface 232 opposite to each other in the thickness direction thereof, where in the first direction X, the first tube wall 221 has a third surface 2211 facing the first flow channel 21, and the second tube wall 222 has a fourth surface 2221 facing the first flow channel 21; the first surface 231 is respectively arranged at an acute angle and an obtuse angle with the third surface 2211 and the fourth surface 2221, and the second surface 232 is respectively arranged at an obtuse angle and an acute angle with the third surface 2211 and the fourth surface 2221; where the first surface 231 is connected to the third surface 2211 through a first chamfered surface 225; and/or, the second surface 232 is connected to the fourth surface 2221 through a second chamfered surface 226.

In the above, the first tube wall 221 has a third surface 2211 facing the first flow channel 21, and the second tube wall 222 has a fourth surface 2221 facing the first flow channel 21, that is, the surface of the first tube wall 221 facing the second tube wall 222 in the first direction X is the third surface 2211, and the surface of the second tube wall 222 facing the first tube wall 221 in the first direction X is the fourth surface 2221.

The first surface 231 is respectively arranged at an acute angle and an obtuse angle with the third surface 2211 and the fourth surface 2221, that is, the first surface 231 of the first division member 23 on one side in the thickness direction thereof is arranged at an acute angle with the first tube wall 221, and the first surface 231 of the first division member 23 on one side in the thickness direction thereof is arranged at an obtuse angle with the second tube wall 222. Similarly, the second surface 232 is respectively arranged at an obtuse angle and an acute angle with the third surface 2211 and the fourth surface 2221, that is, the second surface 232 of the first division member 23 on the other side in the thickness direction thereof is arranged at an obtuse angle with the first tube wall 221, and the second surface 232 of the first division member 23 on the other side in the thickness direction thereof is arranged at an acute angle with the second tube wall 222.

The first surface 231 and the third surface 2211 are connected by a first chamfered surface 225, that is, a chamfer is formed between the first surface 231 of the first division member 23 on one side in the thickness direction thereof and the third surface 2211 of the first tube wall 221 arranged at an acute angle. Similarly, the second surface 232 and the fourth surface 2221 are connected by a second chamfered surface 226, that is, a chamfer is formed between the second surface 232 of the first division member 23 on the other side in the thickness direction thereof and the fourth surface 2221 of the second tube wall 222 arranged at an acute angle.

Exemplarily, the first chamfered surface 225 and the second chamfered surface 226 are both arc surfaces. Of course, in other embodiments, the first chamfered surface 225 and the second chamfered surface 226 may also be planes.

The first surface 231 of the first division member 23 and the third surface 2211 of the first tube wall 221 are arranged at an acute angle and connected through a first chamfered surface 225, and/or the second surface 232 of the first division member 23 and the fourth surface 2221 of the second tube wall 222 are arranged at an acute angle and connected through a second chamfered surface 226. This can increase the thicknesses of the portion of the first division member 23 connected to the first tube wall 231 and the portion of the first division member 23 connected to the second tube wall 222 in the second direction Y, thereby, on the one hand, improving the connection stability and reliability between the first division member 23 and the tube walls, and on the other hand, alleviating the problem of cracks occurring between the first division member 23 and the tube walls.

Referring to FIG. 3 and FIG. 4, in some embodiments, the battery 100 further includes a first confluence member 80 and a second confluence member 90, a first confluence chamber 81 is formed inside the first confluence member 80, and a second confluence chamber 91 is formed inside the second confluence member 90, the first confluence member 80 and the second confluence member 90 are respectively connected to the two ends of the first thermal management component 20 in the third direction Z, each of the first flow channels 21 communicates with the first confluence chamber 81, and each of the first flow channels 21 communicates with the second confluence chamber 91, and any two of the third direction Z, the second direction Y and the first direction X are perpendicular to each other; two first flow channels 21 located at the ends in the second direction Y among the plurality of first flow channels 21 are respectively a first end flow channel and a second end flow channel, and the cross-sectional area of at least one of the first end flow channel and the second end flow channel is smaller than the cross-sectional areas of other first flow channels 21.

The first confluence member 80 and the second confluence member 90 both extend in the second direction Y. The first confluence member 81 extends in the second direction Y, and the second confluence chamber 91 extends in the second direction Y. The first confluence member 80 is provided with a first medium inlet 82, the first medium inlet 82 is used for allowing the heat exchange medium to flow into the first confluence chamber 81, and the second confluence member 90 is provided with a first medium outlet 92, and the first medium outlet 92 is used for allowing the heat exchange medium to flow out of the second confluence chamber 91. The heat exchange medium enters the first confluence chamber 81 from the first medium inlet 82. The heat exchange medium in the first confluence chamber 81 flows towards each first flow channel 21 in the second direction Y, and flows towards the second confluence chamber 91 in the third direction Z in the first flow channel 21. The heat exchange medium in individual first flow channels 21 converges in the second confluence chamber 91 and is discharged from the first medium outlet 92. The first flow channels 21 are connected in parallel.

In the embodiment where the battery 100 includes a plurality of first thermal management components 20, the plurality of first thermal management components 20 may be structures connected with each other in series or structures connected with each other in parallel. If the first medium inlets 82 of the first confluence member 80 connected to the plurality of first thermal management components 20 communicate with each other, and the first medium outlets 92 of the second confluence member 90 connected to the plurality of first thermal management components 20 communicate with each other, the plurality of first thermal management components 20 are structures connected in parallel with each other; and if the first medium inlet 82 of the first confluence member 80 on one thermal management components 20 of the plurality of first thermal management components 20 is connected in sequence with the first medium outlet 92 of the second confluence member 90 on another first thermal management component 20, the plurality of first thermal management components 20 are structures connected in series with each other.

It should be noted that in the structure where the plurality of first thermal management components 20 are connected in series, the first confluence member 80 on one first thermal management component 20 may be directly connected to the second confluence member 90 on another first thermal management component 20, or they may be connected through other components, such as a connecting pipe, etc., to achieve a series structure of the plurality of first thermal management components 20.

In the structure where a plurality of first thermal management components 20 are connected in parallel, it may be that the first confluence members 80 on the individual first thermal management components 20 are directly connected, and the second confluence members 90 on the individual first thermal management components 20 are directly connected, or they may be connected through other components, such as a connecting pipe, etc., to achieve a parallel structure of the plurality of first thermal management components 20.

The smaller the cross-sectional area of the flow channel is, the greater the resistance (flow resistance) to the flow of the heat transfer medium is. The cross-sectional area of at least one of the first end flow channel and the second end flow channel is smaller than the cross-sectional areas of other first flow channels 21, that is, during flowing of the heat exchange medium from the first confluence chamber 81 to each first flow channel 21, the flow resistance of at least one of the first end flow channel and the second end flow channel is greater than the flow resistances of other first flow channels 21, and the heat exchange medium in the first confluence chamber 81 is more likely to flow to the other first flow channels 21.

The cross-sectional area of one of the first end flow channel and the second end flow channel may be smaller than the cross-sectional areas of other first flow channels 21, or the cross-sectional area of the first end flow channel and the cross-sectional area of the second end flow channel may both be smaller than the cross-sectional areas of other first flow channels 21.

The cross-sectional area of at least one of the two first flow channels 21 (the first end flow channel and the second end flow channel) located at the ends in the second direction Y is smaller than the cross-sectional areas of other first flow channels, so that the flow resistance of at least one of the first flow channels located at the ends is larger, and the heat exchange medium flowing out of one of the first confluence member 80 and the second confluence member 90 can be distributed to the first flow channel(s) located between the first end flow channel and the second end flow channel, which is beneficial to distribute sufficient heat exchange medium to each first flow channel 21, thereby improving the uniformity of heat exchange.

In some embodiments, the cross-sectional area of at least one of the first end flow channel and the second end flow channel is the smallest among the plurality of first flow channels 21.

The cross-sectional area of one of the first end flow channel and the second end flow channel may be smallest in all first flow channels 21, or the cross-sectional area of the first end flow channel and the cross-sectional area of the second end flow channel may both be smallest in all first flow channels 21.

If the cross-sectional area of at least one of the first end flow channel and the second end flow channel is the smallest among the plurality of first flow channels 21, the one with the smallest cross-sectional area has the largest flow resistance, and the heat exchange medium is more likely to flow into the first flow channel 21 located between the first end flow channel and the second end flow channel, which is beneficial to distribute sufficient heat exchange medium to each first flow channel 21, thereby improving the uniformity of heat exchange. Since the expansion amount of the edge region of the battery cell 10 in the second direction Y is smaller than the expansion amount of the middle region thereof in the second direction Y, in the case where the sizes of the first flow channels 21 in the first direction X are the same, the smaller the cross-sectional area of the first flow channel 21 is, the smaller the size of the first flow channel 21 in the second direction Y is, so that the corresponding region of the first flow channel 21 is more difficult to be compressed in the first direction X, and has smaller amount of compression, and the cross-sectional areas of the first end flow channel and the second end flow channel are the smallest among the plurality of first flow channels 21. When the battery cell 10 expands, the amount by which the first thermal management component 20 can be compressed in the corresponding regions of the first end flow channel and the second end flow channel in the first direction X is smaller than those in the regions between the first end flow channel and the second end flow channel, so as to match the expansion amounts of different regions of the battery cell 10 in the second direction Y to meet the expansion amount requirements of different regions of the battery cell 10.

In some embodiments, a second flow channel for accommodating a heat exchange medium is formed inside the second thermal management component 30, and in the first direction X, a size of the second flow channel 31 is smaller than a size of the first flow channel 21.

The second thermal management component 30 may be of a plate-like structure provided therein with a second flow channel 31 for accommodating a heat exchange medium. The heat exchange medium in the second flow channel 31 may be water, air, a mixture of water and ethylene glycol, a refrigerant, a phase change material, etc., and the heat exchange medium may be circulating. In other embodiments, the heat exchange medium in the second flow channel 31 may also be solid, such as paraffin, etc. The heat exchange function can be achieved through the change of state of the heat exchange medium. For example, when paraffin changes from solid to liquid, it can absorb heat to achieve the effect of cooling the battery cell 10. The second thermal management component 30 may also be called a water cooling plate, a liquid cooling plate, a heat exchange plate, a temperature regulating plate, etc.

In some other embodiments, in the first direction X, the size of the first flow channel 21 and the size of the second flow channel 31 may be the same, or the size of the first flow channel 21 may be larger than the size of the second flow channel 31. Therefore, in some embodiments, a second flow channel 31 for accommodating the heat exchange medium is formed inside the second thermal management component. There is no relationship between the size of the second flow channel 31 in any direction and the first flow channel 21. The heat exchange medium is accommodated in the second flow channel 31, so that the second thermal management component 30 can realize the temperature regulation function of the first battery cell 11. The configuration of the second flow channel 31 also provides a space for the second thermal management component 30 to be compressed in the first direction X, so that the second thermal management component 30 can absorb the expansion of the first battery cell 11 in the direction away from the first thermal management component 20 by being compressed, thereby meeting the expansion requirements of the first battery cell 11 in the direction away from the first thermal management component 20.

In some embodiments, a plurality of second flow channels 31 are formed inside the second thermal management component 30, where the plurality of second flow channels 31 are arranged side by side in a second direction Y, and the second direction Y is perpendicular to the first direction X.

The second direction Y is the width direction of the second thermal management component 30. Each second flow channel 31 extends in the third direction Z. The extending direction of the second flow channel 31 is the flow direction of the heat exchange medium in the second flow channel 31. The third direction Z is the length direction of the second thermal management component 30. Any two of the third direction Z, the second direction Y and the first direction X are perpendicular to each other.

The plurality of second flow channels 31 arranged side by side in the second direction Y are formed inside the second thermal management component 30, which facilitates controlling the flow velocity and flow rate of the heat exchange medium in the second thermal management component 30.

In some other embodiments, only one second flow channel 31 may be formed inside the second heat management component 30, so that the structure of the second heat management component 30 is simpler.

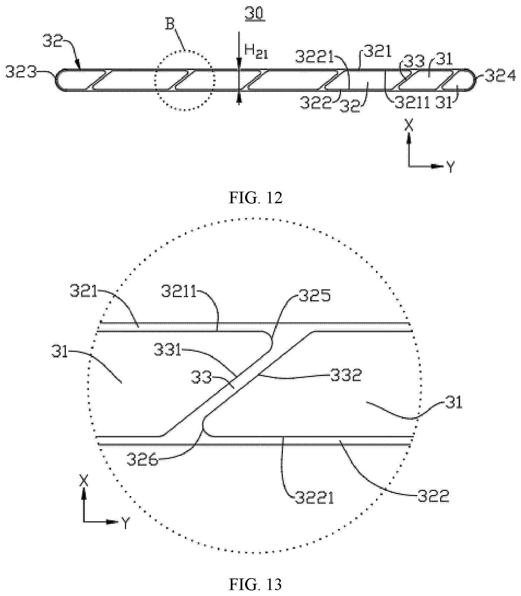

As shown in FIG. 12 and FIG. 13, in some embodiments, the second thermal management component 30 includes a second tube body 32 and at least one second division member 33 disposed inside the second tube body 32, and the at least one second division member 33 divides the internal space of the second tube body 32 into a plurality of second flow channels 31.

The second division member 33 extends in the third direction Z to divide the internal space of the second tube body 32 into a plurality of second flow channels 31 extending in the third direction Z. There may be one or more second division member 33. In the embodiment where there are a plurality of second division member 33, the plurality of second division members 33 are spacedly arranged in the second direction Y. In the second direction Y, the spacings between two adjacent second division members 33 may be the same or different. In the second direction Y, the distance between the second division members 33 gradually decreases from the middle to two sides. In an embodiment where there are a plurality of second division members 33, in the second direction Y, the maximum distance between the third bent portion (shown in FIG. 11 and described below) and the second division member 33 closest thereto is smaller than the distance between any two adjacent second division members 33, and the maximum distance between the fourth bent portion (shown in FIG. 11 and described below) and the second division member 33 closest thereto is smaller than the distance between any two adjacent second division members 33.

The second division member 33 is connected inside the second tube body 32. The second division member 33 and the second tube body 32 may be provided separately, and then connected inside the second tube body 32 by welding, bonding, or the like. The second division member 33 and the second tube body 32 may be connected fixedly by e.g., welding, bonding, etc., to improve the stability of each second flow channel 31. The second division member 33 and the second tube body 32 may also be detachably connected, the second tube body 32 is provided therein with a slot for allowing the second division member 33 to be inserted/snapped thereinto, and the second division member 33 is inserted/snapped into the slot to achieve detachable connection with the second tube body 32.

In other embodiments, the second tube body 32 and the second division member 33 may also be integrally formed.

The at least one second division member 33 is provided in the internal space of the second tube body 32, to divide the internal space of the second tube body 32 into the plurality of second flow channels 31 for accommodating the heat exchange medium, so as to facilitate controlling the flow velocity and flow rate of the heat exchange medium in the second thermal management component 30.

Continuing to refer to FIG. 12 and FIG. 13, in some embodiments, in the first direction X, the second tube body 32 includes a third tube wall 321 and a fourth tube wall 322 provided opposite to each other, and the second division member 33 is obliquely provided between the third tube wall 321 and the fourth tube wall 322 and connected to the third tube wall 321 and the fourth tube wall 322.

The third tube wall 321 and the fourth tube wall 322 are both straight walls. The third tube wall 321 and the fourth tube wall 322 are provided opposite to each other in the first direction X, that is, the third tube wall 321 and the fourth tube wall 322 are provided spacedly and facing each other in the first direction X. The first direction X is the thickness direction of the third tube wall 321 and the fourth tube wall 322, that is, the third tube wall 321 and the fourth tube wall 222 are provided spaced from and parallel to each other.

The third tube body further includes a third bending wall 323 and a fourth bending wall 324 that are arranged opposite to each other in the second direction Y. One end of the third tube wall 321 in the second direction Y and one end of the fourth tube wall 322 in the second direction Y are respectively connected to two ends of the third bending wall 323 in the first direction X. The other end of the third tube wall 321 in the second direction Y and the other end of the fourth tube wall 322 in the second direction Y are respectively connected to two ends of the fourth bending wall 324 in the first direction X. The third tube wall 321, the third bending wall 323, the fourth tube wall 322 and the fourth bending wall 324 are sequentially connected end to end to together define an internal space of the second tube body 32. One second flow channel 31 is formed between the third bending wall 323 and the second division member 33, and one second flow channel 31 is formed between the fourth bending wall 324 and the second division member 33.

The third bending wall 323 and the fourth bending wall 324 are each a bending structure connected between the third tube wall 321 and the fourth tube wall 322. The third bending wall 323 and the fourth bending wall 324 can have various bending directions. For example, the third bending wall 323 and the fourth bending wall 324 are arc-shaped, V-shaped, etc.

In other embodiments, two straight walls may also be used to replace the third bending wall 323 and the fourth bending wall 324.

The second division member 33 is obliquely disposed between the third tube wall 321 and the fourth tube wall 322 and is connected to the third tube wall 321 and the fourth tube wall 322, that is, the third tube wall 321 and the fourth tube wall 322 are not vertically connected to the second division member 33.

By making the second division member 33 obliquely provided and connected between the third tube wall 321 and the fourth tube wall 322, the second thermal management component 30 can be compressed and deformed in the first direction X to absorb the expansion of the first battery cell 11, thereby reducing the difficulty of compressing the second thermal management component 30 in the first direction X.

In some embodiments, the second division member 33 has a fifth surface 331 and a six surface 332 opposite to each other in the thickness direction thereof, where in the first direction X, the third tube wall 321 has a seventh surface 3211 facing the second flow channel 31, and the fourth tube wall 322 has an eighth surface 3221 facing the second flow channel 31; the fifth surface 331 is respectively arranged at an acute angle and an obtuse angle with the seventh surface 3211 and the eighth surface 3221, and the six surface 332 is respectively arranged at an obtuse angle and an acute angle with the seventh surface 3211 and the eighth surface 3221; where the fifth surface 331 is connected to the seventh surface 3211 through a third chamfered surface 235; and/or, the sixth surface 332 is connected to the eighth surface 3221 through a fourth chamfered surface 236.

In the above, the third tube wall 321 has a seventh surface 3211 facing the second flow channel 31, and the fourth tube wall 322 has an eighth surface 3221 facing the second flow channel 31, that is, the surface of the third tube wall 321 facing the fourth tube wall 322 in the first direction X is the seventh surface 3211, and the surface of the fourth tube wall 322 facing the third tube wall 321 in the first direction X is the eighth surface 3221.

The fifth surface 331 is arranged at an acute angle and an obtuse angle with the seventh surface 3211 and the eighth surface 3221 respectively, that is, the fifth surface 331 of the second division member 33 on one side in its thickness direction is arranged at an acute angle with the third tube wall 321, and the fifth surface 331 of the second division member 33 on one side in its thickness direction is arranged at an obtuse angle with the fourth tube wall 322. Similarly, the sixth surface 332 is respectively arranged at an obtuse angle and an acute angle with the seventh surface 3211 and the eighth surface 3221, that is, the sixth surface 332 of the second division member 33 on the other side in the thickness direction thereof is arranged at an obtuse angle with the third tube wall 321, and the sixth surface 332 of the second division member 33 on the other side in the thickness direction thereof is arranged at an acute angle with the fourth tube wall 322.

The fifth surface 331 and the seventh surface 3211 are connected by a third chamfered surface 235, that is, a chamfer is formed between the fifth surface 331 on one side of the second division member 33 in the thickness direction thereof and the seventh surface 3211 of the third tube wall 321 arranged at an acute angle. Similarly, the sixth surface 332 and the eighth surface 3221 are connected by a fourth chamfered surface 236, that is, a chamfer is formed between the sixth surface 332 on the other side of the second division member 33 in the thickness direction thereof and the eighth surface 3221 of the fourth tube wall 322 arranged at an acute angle.

Exemplarily, the third chamfered surface 235 and the fourth chamfered surface 236 are both arc surfaces. Of course, in other embodiments, the third chamfered surface 235 and the fourth chamfered surface 236 may also be planes.

The fifth surface 331 of the second division member 33 and the seventh surface 3211 of the third tube wall 321 are arranged at an acute angle and connected through a third chamfered surface 235, and/or the sixth surface 332 of the second division member 33 and the eighth surface 3221 of the fourth tube wall 322 are arranged at an acute angle and connected through a fourth chamfered surface 236. This can increase the thicknesses of the portion of the second division member 33 connected to the third tube wall 231 and the portion of the second division member 33 connected to the fourth tube wall 322 in the second direction Y, thereby, on the one hand, improving the connection stability and reliability between the second division member 33 and the tube walls, and on the other hand, alleviating the problem of cracks occurring between the second division member 33 and the tube walls.

Continuing to refer to FIG. 3 and FIG. 4, in some embodiments, the battery 100 further includes a third confluence member 110 and a fourth confluence member 120, a third confluence chamber 1101 is formed inside the third confluence member 110, and a fourth confluence chamber 1201 is formed inside the fourth confluence member 120, the third confluence member 110 and the fourth confluence member 120 are respectively connected to the two ends of the second thermal management component 30 in the third direction Z, each of the second flow channels 31 communicates with the third confluence chamber 1101, and each of the second flow channels 31 communicates with the fourth confluence chamber 1201, and any two of the third direction Z, the second direction Y and the first direction X are perpendicular to each other; two second flow channels 31 located at the ends in the second direction Y among the plurality of second flow channels 31 are respectively a third end flow channel and a fourth end flow channel, and the cross-sectional area of at least one of the third end flow channel and the fourth end flow channel is smaller than the cross-sectional areas of other second flow channels 31.

The third confluence member 110 and the fourth confluence member 120 both extend in the second direction Y. The third confluence member 1101 extends in the second direction Y, and the fourth confluence chamber 1201 extends in the second direction Y. The third confluence member 110 is provided with a second medium inlet 1102, the second medium inlet 1102 is used for allowing the heat exchange medium to flow into the third confluence chamber 1101, and the fourth confluence member 120 is provided with a second medium outlet 1202, and the second medium outlet 1202 is used for allowing the heat exchange medium to flow out of the fourth confluence chamber 1201. The heat exchange medium enters the third confluence chamber 1101 from the second medium inlet 1102. The heat exchange medium in the third confluence chamber 1101 flows towards each second flow channel 31 in the second direction Y, and flows towards the fourth confluence chamber 1201 in the third direction Z in the second flow channel 31. The heat exchange medium in each second flow channel 21 converges in the fourth confluence chamber 1201 and is discharged from the second medium outlet 1202. The second flow channels 31 are connected in parallel.

In the embodiment where the battery 100 includes a plurality of second thermal management components 30, the plurality of second thermal management components 30 may be structures connected with each other in series or structures connected with each other in parallel. If the second medium inlets 1102 of the third confluence member 110 connected to the plurality of second thermal management components 30 communicate with each other, and the second medium outlets 1202 of the fourth confluence member 120 connected to the plurality of second thermal management components 30 communicate with each other, the plurality of second thermal management components 30 are structures connected in parallel with each other; and if the second medium inlet 1102 of the third confluence member 110 on one second thermal management components 30 of the plurality of second thermal management components 30 is connected in sequence with the second medium outlet 1202 of the fourth confluence member 120 on another second thermal management component 30, the plurality of second thermal management components 30 are structures connected in series with each other.

It should be noted that in the structure where a plurality of second thermal management components 30 are connected in series, the third confluence member 110 on one second thermal management component 30 may be directly connected to the third confluence member 110 on another second thermal management component 30, or they may be connected through other components, such as a connecting pipe, etc., to achieve a series structure of the plurality of second thermal management components 30.

In the structure where a plurality of second thermal management components 30 are connected in series, it may be that the third confluence member 110 on the individual second thermal management components 30 are directly connected, and the fourth confluence members 120 on the individual second thermal management components 30 are directly connected, or they may be connected through other components, such as a connecting pipe, etc., to achieve a parallel structure of the plurality of second thermal management components 30.

The cross-sectional area of at least one of the third end flow channel and the fourth end flow channel is smaller than the cross-sectional areas of other second flow channels 31, that is, during flowing of the heat exchange medium from the third confluence chamber 1101 to each second flow channel 31, the flow resistance of at least one of the third end flow channel and the fourth end flow channel is greater than the flow resistances of other second flow channels 31, and the heat exchange medium in the third confluence chamber 1101 is more likely to flow to the other second flow channels 31.

The cross-sectional area of one of the third end flow channel and the fourth end flow channel may be smaller than the cross-sectional areas of other second flow channels 31, or the cross-sectional area of the third end flow channel and the cross-sectional area of the fourth end flow channel may both be smaller than the cross-sectional areas of other second flow channels 31.

The cross-sectional area of at least one of the two second flow channels 31 (the third end flow channel and the fourth end flow channel) located at the ends in the second direction Y is smaller than the cross-sectional areas of other second flow channels 31, so that the flow resistance of at least one of the second flow channels 31 located at the ends is larger, and the heat exchange medium flowing out of one of the third confluence member 110 and the fourth confluence member 120 can be distributed to the second flow channel(s) 31 located between the third end flow channel and the fourth end flow channel, which is beneficial to distribute sufficient heat exchange medium to each second flow channel 31, thereby improving the uniformity of heat exchange.

The first thermal management component 20 and the second thermal management component 30 may be structures independent from each other, or may form a series structure or a parallel structure. In an embodiment where the battery 100 includes a plurality of first thermal management components 20 and a plurality of second thermal management components 30, a first series structure may be formed between the plurality of first thermal management components 20, a second series structure may be formed between the plurality of second thermal management components 30, and the first series structure and the second series structure may be connected in series or in parallel; or a first parallel structure may be formed between the plurality of first thermal management components 20, a second parallel structure may be formed between the plurality of second thermal management components 30, and the first parallel structure and the second parallel structure may be connected in series or in parallel; or a first series structure may be formed between the plurality of first thermal management components 20, a first parallel structure may be formed between the plurality of second thermal management components 30, and the first series structure and the first parallel structure may be connected in series or in parallel; or a second parallel structure may be formed between the plurality of first thermal management components 20, a second series structure may be formed between the plurality of second thermal management components 30, and the second parallel structure and the second series structure may be connected in series or in parallel.

In some embodiments, the cross-sectional area of at least one of the third end flow channel and the fourth end flow channel is the smallest among the plurality of second flow channels 31.

The cross-sectional area of one of the third end flow channel and the fourth end flow channel may be smallest in all second flow channels 31, or the cross-sectional area of the third end flow channel and the cross-sectional area of the fourth end flow channel may both be smallest in all second flow channels 31.

If the cross-sectional area of at least one of the third end flow channel and the fourth end flow channel is the smallest among the plurality of second flow channels 31, the one with the smallest cross-sectional area has the largest flow resistance, and the heat exchange medium is more likely to flow into the second flow channel 31 located between the third end flow channel and the fourth end flow channel, which is beneficial to distribute sufficient heat exchange medium to each second flow channel 31, thereby improving the uniformity of heat exchange. Since the expansion amount of the edge region of the first battery cell 11 in the second direction Y is smaller than the expansion amount of the middle region thereof in the second direction Y, in the case where the sizes of the second flow channels 31 in the first direction X are the same, the smaller the cross-sectional area of the second flow channel 31 is, the smaller the size of the second flow channel 31 in the second direction Y is, so that the corresponding region of the second flow channel 31 is more difficult to be compressed in the first direction X, and has smaller amount of compression, and the cross-sectional areas of the third end flow channel and the fourth end flow channel are the smallest among the plurality of second flow channels 31. When the first battery cell 11 expands, the amount by which the second thermal management component 30 can be compressed in the corresponding regions of the third end flow channel and the fourth end flow channel in the first direction X is smaller than those in the regions between the third end flow channel and the fourth end flow channel, so as to match the expansion amounts of different regions of the first battery cell 11 in the second direction Y to meet the expansion amount requirements of different regions of the first battery cell 11.

In a second aspect, the present application further provides an electric device, including at least one battery 100 provided in any of the above embodiments.

Embodiments of the present application provide a battery 100. The battery 100 includes a plurality of battery cells 10 stacked in a first direction X, one first thermal management component 20 is provided between two adjacent battery cells 10, and in the first direction X, two opposite surfaces of the first thermal management component 20 respectively abut against the first side surfaces 12 with the largest area of the two battery cells 10 located on two sides thereof. The plurality of battery cells 10 include two first battery cells 11 located at two ends in the first direction X, one side of each first battery cells 11 away from the first thermal management component 20 is provided with one second thermal management component 30, where in the first direction X, the second thermal management component 30 abuts against the first side surface 12 with largest area of the first battery cell away from the first thermal management component 20. The surface of the side of the second thermal management component 30 facing away from the first battery cell 11 abuts against the fixing part 40. In the first direction X, the thickness of the second thermal management component 30 is less than the thickness of the first thermal management component 20. The first thermal management component 20 is formed with a plurality of first flow channels 21 arranged in the second direction Y, and the second thermal management component 30 is formed with a plurality of second flow channels 31 arranged in the second direction Y.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. A battery, comprising:
a plurality of battery cells stacked in a first direction, wherein the plurality of battery cells comprise two first battery cells located at two ends in the first direction, two adjacent battery cells are provided therebetween with at least one first thermal management component, and one side of at least one of the first battery cells away from the at least one first thermal management component in the first direction is provided with at least one second thermal management component,
wherein in the first direction, a thickness of the at least one second thermal management component is less than a thickness of the at least one first thermal management component.

2. The battery according to claim 1, further comprising two fixing parts, wherein in the first direction, the two fixing parts are located on two sides of the plurality of battery cells, the at least one first thermal management component abuts between two adjacent battery cells, and the at least one second thermal management component abuts between the fixing part and the first battery cell.

3. The battery according to claim 2, further comprising a box, wherein the plurality of battery cells, the at least one first thermal management component and the at least one second thermal management component are accommodated in the box; and
the box comprises two first side walls arranged opposite to each other in the first direction, and the first side walls form the fixing parts.

4. The battery according to claim 2, further comprising a box, wherein the plurality of battery cells, the at least one first thermal management component and the at least one second thermal management component are accommodated in the box; and
the battery further comprises separation beams, the separation beams are installed inside the box, and the separation beams form the fixing parts.

5. The battery according to any one of claims 2 to 4, further comprising barrier members, wherein in the first direction, the barrier members each abut between the at least one second thermal management component and the corresponding fixing part, and a thermal resistance of the barrier members is greater than a thermal resistance of the second thermal management component.

6. The battery according to any one of claims 1 to 5, wherein two adjacent battery cells are provided therebetween with one first thermal management component; and/or one side of each of the first battery cells away from the first thermal management component in the first direction is provided therebetween with one second thermal management component.

7. The battery according to any one of claims 1 to 6, wherein in the first direction, the thickness of the second thermal management component is less than the thickness of the first thermal management component.

8. The battery according to any one of claims 1 to 7, wherein at least one first flow channel configured for accommodating a heat exchange medium is formed inside the first thermal management component.

9. The battery according to claim 8, wherein a plurality of first flow channels are formed inside the first thermal management component, the plurality of first flow channels are arranged side by side in a second direction, and the second direction is perpendicular to the first direction.

10. The battery according to claim 9, wherein the first thermal management component comprises a first tube body and at least one first division member disposed inside the first tube body, and the at least one first division member divides an internal space of the first tube body into the plurality of first flow channels.

11. The battery according to claim 10, wherein in the first direction, the first tube body comprises a first tube wall and a second tube wall provided opposite to each other, and the first division member is obliquely provided between the first tube wall and the second tube wall and connected to the first tube wall and the second tube wall.

12. The battery according to claim 11, wherein the first division member has a first surface and a second surface opposite to each other in a thickness direction thereof, and in the first direction, the first tube wall has a third surface facing the first flow channel, and the second tube wall has a fourth surface facing the first flow channel; and
the first surface is respectively provided at an acute angle and an obtuse angle with the third surface and the fourth surface, and the second surface is respectively provided at an obtuse angle and an acute angle with the third surface and the fourth surface,
wherein the first surface is connected to the third surface through a first chamfered surface; and/or the second surface is connected to the fourth surface through a second chamfered surface.

13. The battery according to any one of claims 9 to 12, further comprising a first confluence member and a second confluence member, wherein a first confluence chamber is formed inside the first confluence member, a second confluence chamber is formed inside the second confluence member, the first confluence member and the second confluence member are respectively connected to two ends of the first thermal management component in a third direction, each of the first flow channels communicates with the first confluence chamber, each of the first flow channels communicates with the second confluence chamber, and any two of the third direction, the second direction and the first direction are perpendicular to each other; and
two first flow channels located at ends in the second direction among the plurality of first flow channels are respectively a first end flow channel and a second end flow channel, and a cross-sectional area of at least one of the first end flow channel and the second end flow channel is smaller than cross-sectional areas of other first flow channels.

14. The battery according to claim 13, wherein the cross-sectional area of at least one of the first end flow channel and the second end flow channel is smallest among the plurality of first flow channels.

15. The battery according to any one of claims 8 to 14, wherein at least one second flow channel configured for accommodating a heat exchange medium is formed inside the second thermal management component, and in the first direction, a size of the at least one second flow channel is smaller than a size of the at least one first flow channel.

16. The battery according to any one of claims 1 to 14, wherein at least one second flow channel configured for accommodating a heat exchange medium is formed inside the second thermal management component.

17. The battery according to claim 15 or 16, wherein a plurality of second flow channels are formed inside the second thermal management component, the plurality of second flow channels are arranged side by side in a second direction, and the second direction is perpendicular to the first direction.

18. The battery according to claim 17, wherein the second thermal management component comprises a second tube body and at least one second division member disposed inside the second tube body, and the at least one second division member divides an internal space of the second tube body into the plurality of second flow channels.

19. The battery according to claim 18, wherein in the first direction, the second tube body comprises a third tube wall and a fourth tube wall provided opposite to each other, and the second division member is obliquely provided between the third tube wall and the fourth tube wall and connected to the third tube wall and the fourth tube wall.

20. The battery according to claim 19, wherein the second division member has a fifth surface and a sixth surface opposite to each other in a thickness direction thereof, and in the first direction, the third tube wall has a seventh surface facing the second flow channel, and the fourth tube wall has an eighth surface facing the second flow channel; and
the fifth surface is respectively provided at an acute angle and an obtuse angle with the seventh surface and the eighth surface, and the sixth surface is respectively provided at an obtuse angle and an acute angle with the seventh surface and the eighth surface,
wherein the fifth surface is connected to the seventh surface through a third chamfered surface; and/or the sixth surface is connected to the eighth surface through a fourth chamfered surface.

21. The battery according to any one of claims 17 to 20, further comprising a third confluence member and a fourth confluence member, wherein a third confluence chamber is formed inside the third confluence member, a fourth confluence chamber is formed inside the fourth confluence member, the third confluence member and the fourth confluence member are respectively connected to two ends of the second thermal management component in the third direction, each of the second flow channels communicates with the third confluence chamber, each of the second flow channels communicates with the fourth confluence chamber, and any two of the third direction, the second direction and the first direction are perpendicular to each other; and
two second flow channels located at ends in the second direction among the plurality of second flow channels are respectively a third end flow channel and a fourth end flow channel, and a cross-sectional area of at least one of the third end flow channel and the fourth end flow channel is smaller than cross-sectional areas of other second flow channels.

22. The battery according to claim 21, wherein the cross-sectional area of at least one of the third end flow channel and the fourth end flow channel is smallest among the plurality of second flow channels.

23. An electric device, comprising at least one battery each according to any one of claims 1 to 22.
